# EUROPEAN PATENT APPLICATION

(11) **EP 2 460 729 A1**
(43) Date of publication of application: **06.06.2012**
(21) Application number: 11275081.5
(22) Date of filing: 12.05.2011
(51) Int. Cl.: B64D 33/02, F02C 7/042, F42B 10/32, F42B 15/10

(54) **An air intake system for an air vehicle**

(30) Priority: 01.12.2010 GB 201020410
(71) Applicant: MBDA UK Limited, Stevenage Hertfordshire SG1 2DA (GB)
(72) Inventor: The designation of the inventor has not yet been filed
(74) Representative: BAE SYSTEMS plc Group IP Department

(57) **Abstract**

A missile comprises a propulsion system, a passageway (1) for delivering air to the propulsion system and a ducting element (9) associated with the passageway (1). The ducting element (9) has a ducting surface for ducting air into the passageway (1), and the ducting element (9) is rotatable, about an axis (13) that is aligned, or more preferably co-axial, with the axis (19) of the passageway (1), from a stowed position in which the ducting surface is received in the passageway (1), to a deployed position in which the ducting surface protrudes from the passageway (1) to duct air into the passageway.

## Description

### Technical Field

The present invention relates to an air intake for an air vehicle, and more particularly to an air intake having a deployable ducting element.

### Background of the Invention

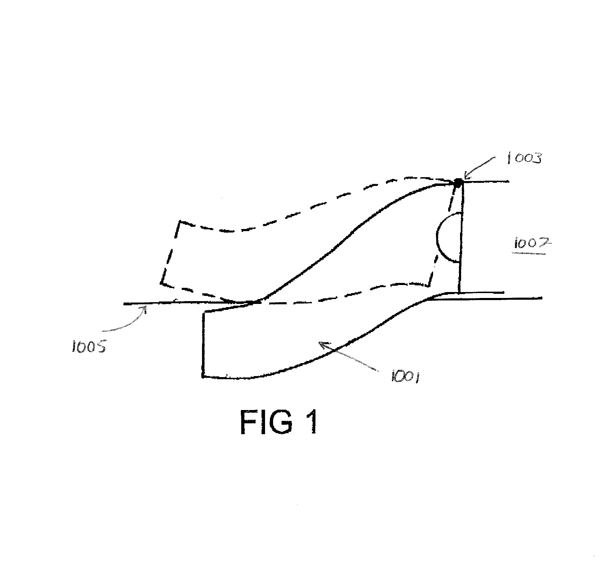

Air vehicles, such as missiles, having an air breathing propulsion system typically have one of three different air intake arrangements. In a first type of arrangement, a ducting element may permanently protrude from the passageway and out of the skin on the air vehicle, to duct air to the propulsion system during flight. This tends to be relatively efficient in terms of delivery of air to the propulsion system, but is not a feasible arrangement for air vehicles having a restricted carriage envelope. In a second type of arrangement, a passageway simply extends from the propulsion system to an opening that is flush with the skin of the air vehicle. This arrangement is useful for air vehicles having a restricted carriage envelope as there is no ducting element that protrudes out of the passageway. However, the arrangement tends to be relatively inefficient in terms of delivering air to the propulsion system. A third type of arrangement on a missile is shown schematically in Figure 1. The missile comprises a deployable ducting element 1001 that is stowed within the missile body (the stowed position of the ducting element being shown in dotted lines in Figure 1). The ducting element 1001 is rotatable about a hinge 1003 to a deployed position in which it protrudes from the skin 1005 of the missile to duct air to the propulsion system 1007. This deployable may be used where the carriage envelope for the missiles is restricted, and also provides efficient ducting of air to the propulsion system, when the ducting element is deployed. However, the stowed ducting element takes up a significant volume in the missile; this volume might otherwise be used for another purpose such as fuel storage.

### Summary of the Invention

The present invention seeks to overcome or mitigate at least some of the above-mentioned disadvantages.

According to a first aspect of the invention, there is provided an air vehicle comprising a propulsion system, a passageway for delivering air to the propulsion system and a ducting element associated with the passageway, the ducting element having a ducting surface for ducting air into the passageway, wherein the ducting element is rotatable, about an axis that is aligned with the axis of the passageway, from a stowed position in which the ducting surface is received in the passageway, to a deployed position in which the ducting surface protrudes from the passageway to duct air into the passageway. By arranging the ducting element to be rotatable about an axis aligned with the axis of the passageway, the ducting surface does not need to be stowed within the useable volume of the air vehicle. Instead, the ducting surface can be stowed in the passageway (and rotated to a position in which it protrudes from the passageway).

The invention is especially useful for arrangements in which the air vehicle has a restricted carriage envelope and/or in which the useable volume of the air vehicle is at a premium. The air vehicle is preferably a UAV, and more preferably the air vehicle is a missile. The missile may be for use where there is a restricted carriage envelope (for example in a tube-launch system, or bay launch system. Where subsequent reference is made to features of a missile, those features may be equally applicable to any air vehicle.

It will be appreciated that the ducting surface may require relative movement between the air vehicle and the ambient air, in order for it to duct air into the passageway. For example, the ducting surface may only duct air during flight of the air vehicle. The ducting surface may act as a forward-facing Pitot-type intake. In the deployed position, the ducting surface may be a fully exposed, or semi-submerged Pitot intake.

The axis of the passageway will be readily identifiable and typically extends along the centreline of the passageway. Where the axis of the passageway curves in one or more directions, the axis about which the ducting element is rotatable will be understood to be aligned with the axis in the localised section of the passageway (in which the ducting element is positioned). The ducting element may be rotatable about an axis that is parallel, but off-set from, the axis of the passageway, but more preferably, the ducting element is rotatable about an axis that is co-axial with the axis of the passageway. Having the axes co-axial enables the ducting element and the passageway to be continuously in a close-fit during rotation of the ducting element. The ducting element preferably has a relatively close fit in the passageway. The ducting element may be in a sleeve-fit in the passageway.

In embodiments in which the air vehicle is a missile, the missile typically has a longitudinal axis and a side wall extending around the longitudinal axis. The passageway may end at an opening in the side wall. The axis of the passageway, and the axis of rotation of the ducting element, are preferably at an angle to the longitudinal axis of the air vehicle. The axis of rotation of the ducting element may be non-parallel and non-perpendicular to the longitudinal axis of the air vehicle. The axis of rotation of the ducting element may be at an angle to the longitudinal axis of the propulsion system.

The ducting surface is suitable for ducting air into the passageway. The ducting surface is typically the part of the ducting element that is exposed to the free-stream flow when the ducting element is in the deployed position (but that is also received in the passageway when the ducting element is in the stowed position). The ducting surface may form part of the ducting element, but does not necessarily form all of the ducting element. It will be appreciated that in the stowed position, the ducting surface, but not necessarily the whole ducting element, is received in the passageway. Thus, part of the ducting element may protrude out of the passageway when the ducting element is in the stowed position. In a preferred embodiment however, the ducting element is wholly received in the passageway in the stowed position, and the ducting element does not, therefore, impact on the carriage envelope.

The ducting element may, in principle, be any shape in which the ducting element is rotatable from a stowed position (in which the ducting surface is received in the passageway), to a deployed position in which the ducting surface protrudes from the passageway to duct air into the passageway. The ducting element is preferably hollow. At least part of the ducting element may be axisymmetric. The at least part of the ducting element is preferably axisymmetric about the axis of rotation of the ducting element. The ducting surface, and more preferably the ducting element, may be shaped to be complementary with the passageway. The cross section of the ducting element may be the same shape (albeit it different size) to the cross section of the passageway at a particular location in the passageway. Having part of the ducting element axisymmetric and/or complementary with the passageway, may enable the ducting element to be relatively firmly fitted and located in a corresponding axisymmetric passageway on the air vehicle, and/or may prevent the ducting element impinging on the passageway during rotation. The whole of the ducting element may not be axisymmetric; the ducting element may be a truncated axisymmetric body, the truncation being such that the ducting element is rotatable between the stowed position and a deployed position in which the ducting surface protrudes from the passageway to duct air into the passageway. The truncation may be a planar truncation (for example the ducting element may be a scarfed axisymmetric body). The truncation may comprise a plurality of truncations in different planes. The truncation may comprise a non-planar truncation (for example in embodiments where the skin on the air vehicle has a relatively high curvature). The non-axisymmetric part of the ducting element preferably includes the ducting surface. In the stowed position, the distal end of the ducting element may be flush with the end of the passageway (where the passageway forms an opening in the skin of the air vehicle).

The ducting element, the passageway or the combination of the ducting element and passageway, may be of constant cross-section. More preferably, the ducting element, the passageway or the combination of the ducting element and passageway act as a diffuser. For example, the ducting element and passageway may have an appropriate longitudinal area distribution to act as a diffuser.

The ducting element may be continually rotatable in the passageway. The ducting element may be rotatable by substantially 180 degrees from the stowed and deployed positions. The ducting element may be rotated before launch of the missile, or during flight. The angular rotation of the element may be changed during flight.

The present invention is especially applicable to air-breathing propulsion systems. For example, the propulsion systems may comprise a turbojet or ramjet.

According to a further aspect of the invention, there is provided an air intake system for an air vehicle, the air intake system comprising a passageway and a ducting element associated with the passageway, the ducting element having a ducting surface for ducting air into the passageway, wherein the ducting element is rotatable, about an axis that is aligned with the axis of the passageway, from a stowed position in which the ducting surface is received in the passageway, to a deployed position in which the ducting surface protrudes from the passageway to duct air into the passageway.

### Description of the Drawings

Various embodiments of the invention will now be described, by way of example only, with reference to the accompanying schematic drawings of which:
Figure 1 is a side view of a known air intake system;
Figure 2 is a side sectional view of a ducting element and passageway on an air intake system on a missile according to a first embodiment of the invention;
Figure 3 is a side section view of the air intake system in Figure 2, but with the ducting element in the deployed position;
Figure 4 is a cross-sectional view along line AA in Figure 3;
Figure 5 is a cross-sectional view along line BB in Figure 3;
Figure 6 is a side view of a ducting element in a second embodiment of the invention;
Figure 7 shows some other possible configurations of a ducting element in further embodiments of the invention; and
Figures 8 and 9 show configurations of a ducting element in yet further embodiments of the invention.

### Detailed Description

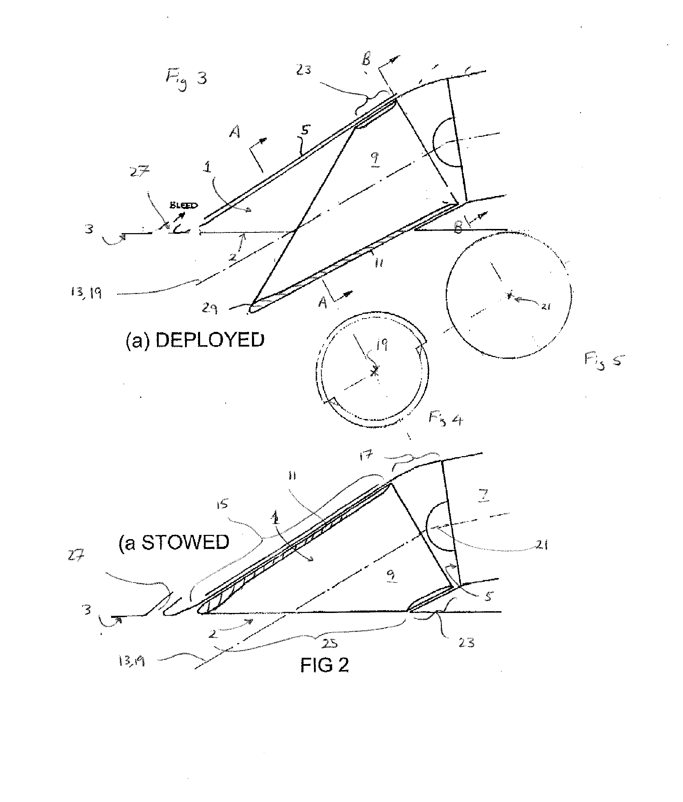

An air intake system on a missile (not shown in full) according to a first embodiment of the invention, is shown in Figures 2 to 5. The air intake system comprises a passageway 1 extending from an opening 2 in the outer skin 3 of the missile, to an inlet 5 of an air breathing turbojet engine 7. Air is free to pass through the opening 2 and along the passageway 1, thereby enabling air to be delivered to the engine 7. The passageway 1 comprises a straight section 15 in the shape of a truncated circular cylinder, and a curved ducting section 17 mating the straight section 15 with the inlet 5 of the engine 7. The straight section 15 (shown in cross-section along A-A in Figure 4) has an axis 19 extending in the longitudinal direction, and the curved section 17 has a central axis 21 curving to alignment with the engine 7.

The air intake system further comprises a ducting element 9. The ducting element 9 is a hollow truncated circular cylinder comprising an axisymmetric base portion 23, and a truncated (scarfed) portion 25. The passageway 1 forms a sleeve around the base portion 23 of the ducting element 9 at all times, and the axis 13 of the ducting element is co-axial with the axis 19 of the straight section 15 of the passageway 1. As shown in Figures 2, 3 and 4 the outer surface of the ducting element 9 is complementary with the inner surface of the passageway 1 such that the surfaces do not impinge on one another during rotation of the ducting element 9 (said rotation being described in more detail below). The close fit between the surfaces also ensures there is relatively little, if any, air flow in the thin region between the ducting element and the inner surface of the passageway. In an alternative embodiment (not shown), a radial spacing between the ducting element and the inner surface of the passageway may be incorporated to permit a proportion of the entry air to be bled off ahead of the engine. The internal edges of the ducting element are shaped to ensure minimal flow disturbance.

Referring back to the first embodiment, the ducting element includes a lip 29 at its foremost position, which is shaped to maximise intake efficiency and minimise the external drag.

A system 27 for bleeding air slightly ahead of the front edge of the opening may be incorporated, for the purpose of forming a fresh and stable boundary layer on entry to the passageway, cooling the engine bay, and/or cooling the exhaust efflux.

The ducting element 9 is rotatable from a stowed to a deployed position. In Figure 2 the ducting element 9 is shown in the stowed position in which it is fully received in the passageway 1. Since the end of the ducting element is flush with the outer skin 3, the missile can be used in situations in which there is a restricted carriage envelope (for example as a tube launch missile). When the ducting element 9 is in the stowed position, air is still able to pass through the opening 2, along the passageway 1, and to the engine 7. However, this arrangement is relatively inefficient at delivering air.

The air intake system in the first embodiment of the invention includes an actuator (not shown) for rotating the ducting element. The actuator comprises a circumferential pretensioned spring which, when released, rotates the ducting element to a deployed position (shown in Figure 3). In the deployed position, a ducting surface 11 (shown shaded in Figures 2, 3 and 4) protrudes from the opening 2 in the missile wing skin 3 into the freestream air flow and forms a semi-submerged Pitot intake (which may also be referred to as an air 'scoop'). This arrangement is more efficient in delivering air to the engine during forward flight of the missile, than the flush intake arrangement when the ducting element is stowed.

Deployable ducting elements *per se* are known, and an example of a deployable ducting element is described above with reference to Figure 1. In the arrangement in Figure 1, the stowed ducting element 1001 takes up a significant volume in the missile; this volume might otherwise be used for another purpose, such as fuel storage. In contrast to the arrangement in Figure 1, the ducting element 9 in the first embodiment of the invention is rotatable about an axis 13 that is aligned with the axis 19 of the passageway. The ducting element is rotatable about this axis between the stowed position (Figure 2) in which the ducting surface 11 is received in the passageway, and a deployed position (Figure 3) in which the ducting surface 11 protrudes from the passageway to duct air into the passageway. Since the ducting element can be stowed within the passageway, this reduces, or even eliminates, the impact of the ducting element 9 on the useable volume in the missile.

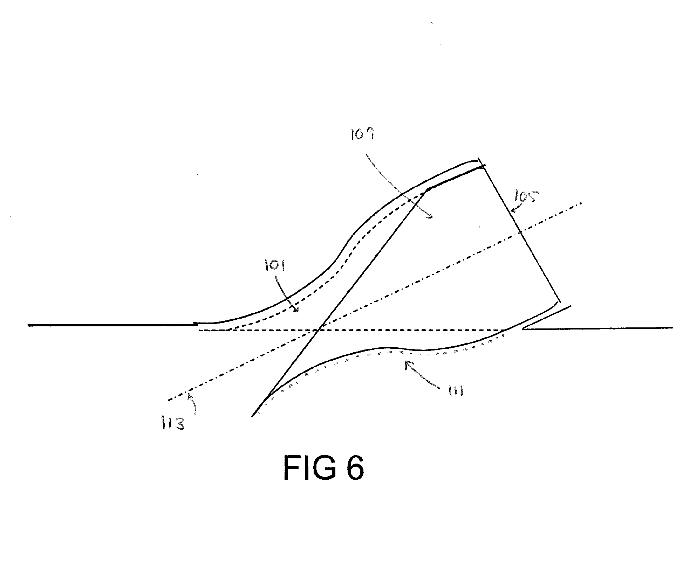

Figure 6 is a ducting element for an air intake system according to a second embodiment of the invention. The same reference numerals are used to refer to features corresponding to those in the first embodiment, but with the prefix 1 or 10 as appropriate. The ducting element 109 has a variable cross-section and acts as a diffuser for the inlet 105 to a ramjet in a missile. The ducting element 109 is received in a passageway 101 of corresponding cross-section in the missile and is rotatable about its central axis 113 in the manner described above with reference to the first embodiment. The ducting surface 111 is marked in parallel solid and dotted lines.

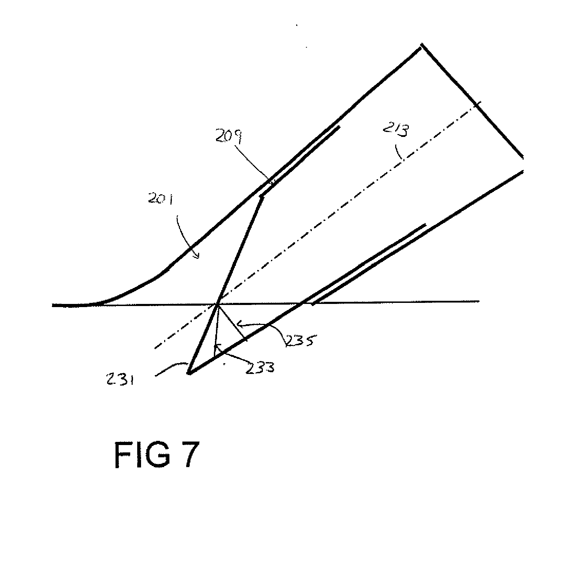

Figure 7 shows some other possible configurations of a ducting element in further embodiments of the invention. The same reference numerals are used to refer to features corresponding to those in the first embodiment, but with the prefix 2 or 20 as appropriate. The ducting element 209 is shown with a single plane truncation 231 (similar to that in the first embodiment), a two-plane truncation 233 in which the end of the element 209 is angled further from the axis 213, and another two-plane truncation 235 in which the end of the element is approximately perpendicular to the axis 213.

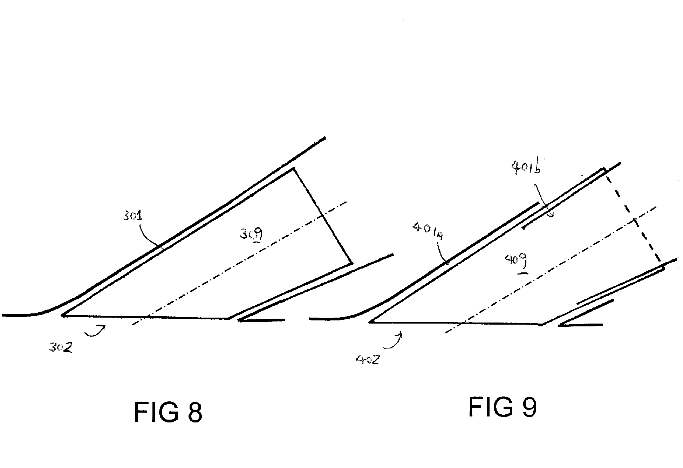

Figures 8 and 9 show ducting elements, located in a stowed position, on further embodiments of the invention. The same reference numerals are used to refer to features corresponding to those in the first embodiment, but with the prefixes 3 or 30, and 4 or 40 as appropriate. In Figure 8, the ducting element 309 is received in a male-female fit in the passageway 301 (the ducting element 309acting as the male member and the passageway 301 acting as the female member). In Figure 9, the passageway 401 comprises two parts: a distal end 401a located near the opening 402, and a proximal end 401b located closer to the engine intake (not shown in Figure 9). The ducting element 409 is received over the proximal end 401b of the passageway 401, in a female-male fit (the ducting element 409 acting as the female member and the proximal end 401b of the passageway acting as the male member). The ducting is received in the remainder of the passageway in a male-female fit as per Figure 8.

Whilst the present invention has been described and illustrated with reference to particular embodiments, it will be appreciated by those of ordinary skill in the art that the invention lends itself to many different variations not specifically illustrated herein. For example, the ducting element need not necessarily comprise an axissymmetric portion. For example, the ducting element may simply comprise a ducting surface that is rotatable about the aligned axis. Said ducting surface may be curved, or even planar. The whole of the ducting element need not necessarily be received in the passageway when the element is in the stowed position. Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims.

## Claims

1. A missile comprising a propulsion system, a passageway for delivering air to the propulsion system and a ducting element associated with the passageway, the ducting element having a ducting surface for ducting air into the passageway, wherein the ducting element is rotatable, about an axis that is aligned with the axis of the passageway, from a stowed position in which the ducting surface is received in the passageway, to a deployed position in which the ducting surface protrudes from the passageway to duct air into the passageway.

2. A missile according to claim 1, wherein the ducting element is rotatable about an axis that is co-axial with the axis of the passageway.

3. A missile according to claim 1 or claim 2, wherein in the stowed position, the ducting element is wholly received in the passageway.

4. A missile according to any preceding claim, wherein at least part of the ducting element is axisymmetric about the axis of rotation of the ducting element.

5. A missile according to any preceding claim, wherein the ducting element is a truncated axisymmetric body.

6. A missile according to any preceding claim, the missile having a longitudinal axis and a side wall extending around the longitudinal axis, wherein the passageway ends at an opening in the side wall.

7. A missile according to claim 6, wherein and the axis of rotation of the ducting element is at an angle to the longitudinal axis of the missile.

8. An air intake system for a missile, the air intake system comprising a passageway and a ducting element associated with the passageway, the ducting element having a ducting surface for ducting air into the passageway, wherein the ducting element is rotatable, about an axis that is aligned with the axis of the passageway, from a stowed position in which the ducting surface is received in the passageway, to a deployed position in which the ducting surface protrudes from the passageway to duct air into the passageway.
